# EUROPEAN PATENT APPLICATION

(11) **EP 4 782 906 A1**
(43) Date of publication of application: **29.07.2026**
(21) Application number: 25210996.2
(22) Date of filing: 24.10.2025
(51) Int. Cl.: G02B 27/01, G02B 3/08

(54) **OPTICAL SYSTEM AND DISPLAY APPARATUS**

(30) Priority: 23.01.2025 CN 202510112578
(71) Applicant: Beijing Zitiao Network Technology Co., Ltd., Beijing 100190 (CN)
(72) Inventor: XIONG, Wen, Beijing, 100028 (CN); FU, Ling, Beijing, 100028 (CN); LI, Xin, Beijing, 100028 (CN)
(74) Representative: Marks & Clerk LLP

(57) **Abstract**

An optical system and a display apparatus are provided. The optical system includes an optical waveguide (100) and a Fresnel lens (200). The optical waveguide (100) includes a waveguide substrate (110), a coupling-in structure (120) and a coupling-out structure (130), the coupling-in structure (120) and the coupling-out structure (130) are provided on the waveguide substrate (110), the optical waveguide (100) is configured such that at least part of light coupled into the optical waveguide (100) via the coupling-in structure (120) exits via the coupling-out structure (130) after undergoing total internal reflection propagation in the optical waveguide (100). The Fresnel lens (200) is located on a light-exiting side of the optical waveguide (100). The coupling-out structure (130) includes a grating (131,132), the Fresnel lens (200) includes Fresnel teeth (201), and the Fresnel teeth (201) are configured to adjust an exit angle of at least part of light passing through the Fresnel lens (200). In a direction perpendicular to the waveguide substrate (110), the coupling-out structure (130) and the Fresnel teeth (201) overlap. Therefore, the Fresnel lens (200) can be used for refractive correction, so that the optical system and the display apparatus are thinner, and at the same time, users with refractive errors can see the display screen clearly.

## Description

### CROSS-REFERENCE TO RELATED APPLICATION

The present application claims priority to the Chinese Patent Application No. 202510112578.4 filed on January 23, 2025, the entire disclosure of which is incorporated herein by reference as portion of the present application.

### TECHNICAL FIELD

At least one embodiment of the present disclosure relates to an optical system and a display apparatus.

### BACKGROUND

An augmented Reality (AR) technology is a technology that skillfully integrates virtual information with the real world. The AR technology can provide users with richer and more intuitive experience. An optical waveguide has the characteristics of thinness and high penetration of external light, so as to be widely used in an AR device.

### SUMMARY

At least one embodiment of the present disclosure provides an optical system and a display apparatus.

At least one embodiment of the present disclosure provides an optical system, the optical system including: an optical waveguide, including a waveguide substrate, a coupling-in structure and a coupling-out structure, wherein the coupling-in structure and the coupling-out structure are provided on the waveguide substrate; and the optical waveguide is configured such that at least part of light coupled into the optical waveguide via the coupling-in structure exits via the coupling-out structure after undergoing total internal reflection propagation in the optical waveguide; and a Fresnel lens, located on a light-exiting side of the optical waveguide; wherein the coupling-out structure includes a grating, the Fresnel lens includes Fresnel teeth, and the Fresnel teeth are configured to adjust an exit angle of at least part of light passing through the Fresnel lens; and in a direction perpendicular to the waveguide substrate, the coupling-out structure and the Fresnel teeth overlap.

For example, according to an embodiment of the present disclosure, the coupling-out structure includes a transmission grating; the transmission grating is provided on a side of the waveguide substrate facing the Fresnel lens, so that at least part of the light incident on the optical waveguide is incident on the Fresnel lens after being transmitted via the transmission grating.

For example, according to an embodiment of the present disclosure, the Fresnel lens is configured as a protective cover plate of the optical waveguide.

For example, according to an embodiment of the present disclosure, the coupling-out structure includes a reflection grating; the reflection grating is provided on a side of the waveguide substrate away from the Fresnel lens, so that at least part of the light incident on the optical waveguide is incident on the Fresnel lens after being reflected via the reflection grating; the optical system further includes a protective cover plate, and the protective cover plate is located on a side of the reflection grating away from the Fresnel lens.

For example, according to an embodiment of the present disclosure, the Fresnel lens includes a first surface and a second surface arranged oppositely, and the first surface is located on a side of the second surface away from the optical waveguide; at least a partial region of at least one of the first surface and the second surface is provided with the Fresnel teeth.

For example, according to an embodiment of the present disclosure, an orthogonal projection of the coupling-out structure on the waveguide substrate is within a range of an orthogonal projection of the Fresnel teeth on the waveguide substrate.

For example, according to an embodiment of the present disclosure, an orthogonal projection of the coupling-in structure on the waveguide substrate does not overlap with an orthogonal projection of the Fresnel teeth on the waveguide substrate.

For example, according to an embodiment of the present disclosure, an air gap is provided between the Fresnel lens and the optical waveguide.

For example, according to an embodiment of the present disclosure, the optical system further including a transparent layer; wherein the transparent layer is provided between the Fresnel lens and the optical waveguide, and a refractive index of the transparent layer is smaller than a refractive index of the Fresnel lens.

For example, according to an embodiment of the present disclosure, the refractive index of the transparent layer is greater than 1 and less than 1.5.

For example, according to an embodiment of the present disclosure, the optical waveguide includes a middle region and an edge region surrounding the middle region, and both the coupling-in structure and the coupling-out structure are located in the middle region; the optical system further includes an adhesive layer glued between the Fresnel lens and the optical waveguide, and the adhesive layer is located in the edge region and configured to maintain an interval between the optical waveguide and the Fresnel lens.

For example, according to an embodiment of the present disclosure, microspheres are provided in the adhesive layer, and the microspheres are configured to maintain the interval between the Fresnel lens and the optical waveguide.

For example, according to an embodiment of the present disclosure, the optical waveguide includes a turning structure provided on the waveguide substrate; the turning structure, the coupling-in structure and the coupling-out structure are all located on a same side of the waveguide substrate.

For example, according to an embodiment of the present disclosure, an orthogonal projection of the turning structure on the waveguide substrate is within a range of an orthogonal projection of the Fresnel teeth on the waveguide substrate.

At least one embodiment of the present disclosure provides a display apparatus, the display apparatus including an opto-mechanical module and an above-mentioned optical system, wherein the coupling-in structure is configured to couple light emitted by the opto-mechanical module into the waveguide substrate.

### BRIEF DESCRIPTION OF DRAWINGS

**In** order to more clearly illustrate the technical solutions of the embodiments of the present disclosure, the accompanying drawings of the embodiments will be briefly introduced below, it is obvious that the accompanying drawings in the following description merely relate to some embodiments of the present disclosure, but not the limitations of the present disclosure.
Fig. 1 is a schematic diagram of an optical system.
Fig. 2 is a schematic diagram of a partial structure of a display apparatus according to an example in at least one embodiment of the present disclosure.
Fig. 3A is a schematic diagram of a refraction lens.
Fig. 3B is a cross-sectional schematic diagram of a Fresnel lens.
Fig. 3C is a plane schematic diagram of a Fresnel lens shown in Fig. 3B.
Fig. 4 is a schematic diagram of an optical path of an optical waveguide of an optical system in a display apparatus shown in Fig. 2.
Fig. 5 is a schematic diagram of an inclined grating.
Fig. 6 to Fig. 8 are partial schematic diagrams of optical systems according to different examples in at least one embodiment of the present disclosure.
Fig. 9 is a schematic diagram of an optical path of an optical waveguide of an optical system shown in Fig. 7.
Fig. 10 is a schematic diagram of a blazed grating.
Fig. **11** is a schematic diagram of orthogonal projections of a coupling-in structure, a coupling-out structure, a turning structure, Fresnel teeth and an adhesive layer on a waveguide substrate in an optical system according to an example in at least one embodiment of the present disclosure.
Fig. 12 is a schematic diagram of a partial structure of a display apparatus according to an example in at least one embodiment of the present disclosure.
Fig. 13 is a cross-sectional schematic diagram of an optical system shown in Fig. 11.
Fig. 14 is a schematic diagram of a myopia lens for refractive correction of human eyes.
Fig. 15 is a schematic diagram of a Fresnel lens for refractive correction of human eyes.
Fig. 16 is a curve chart showing the variation of a diffuse spot using a myopic lens with the field of view.
Fig. 17 and Fig. 18 are curve charts showing the variation of diffuse spots using different Fresnel lenses with the field of view, respectively.

### DETAILED DESCRIPTION

In order to make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present disclosure, are not intended to indicate any sequence, amount or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects.

In the embodiment of the present disclosure, the features, "parallel to," "perpendicular to," "identical to," etc., all include the features "parallel to," "perpendicular to," "identical to," etc., in the strict sense, as well as the cases containing certain errors, such as "approximately parallel to," "approximately perpendicular to," "approximately identical to," etc. Considering the measurement and the errors related to the measurement of a specific quantity (e.g., the limitation of the measurement system), they are within an acceptable deviation range for the specific quantity determined by those skilled in the art. For example, the "center" in the embodiment of the present disclosure can include a strictly geometric center position and a roughly central position in a small area around the geometric center. For example, the term "approximately" can mean within one or more standard deviations, or within 10% or 5% deviation of the stated value.

An optical waveguide has become an important optical element of an AR device because of its obvious advantages such as light weight and thin thickness. The optical waveguide can couple the image light emitted by a light source such as an opto-mechanical module into an optical waveguide substrate, and release the image light after transmitting the image light to the front of human eyes through total internal reflection.

**In** the research, the inventor of the present disclosure found that based on a display principle of optical waveguide mentioned above, a focal length of a display screen presented to users in the AR device by using the optical waveguide technology is infinite. When users have refractive errors such as myopia and hyperopia, the users are unable to see the display screen clearly if they directly use the AR device without wearing corrective glasses.

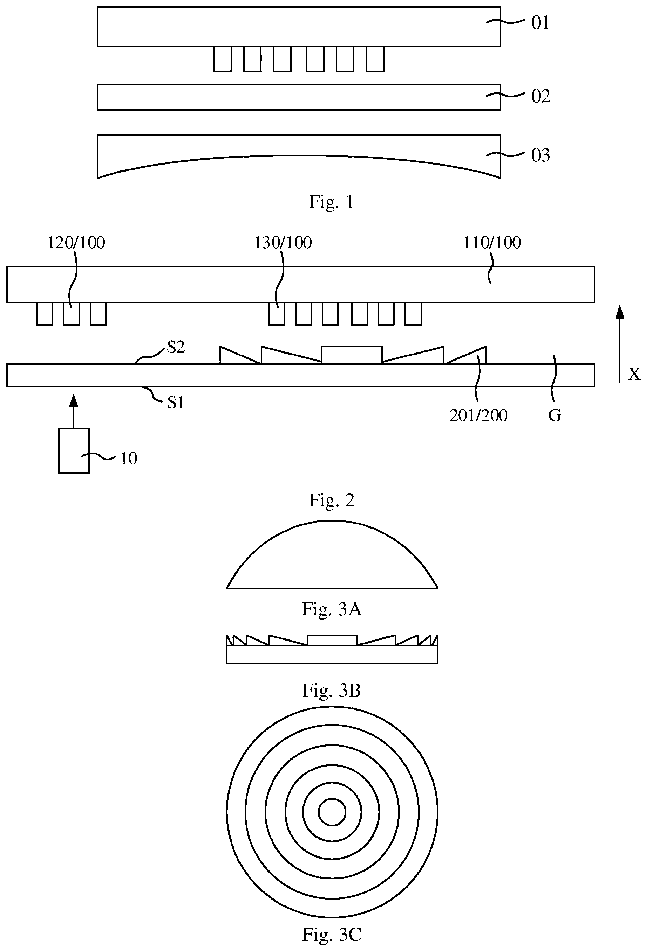

Fig. 1 is a schematic diagram of an optical system.

Referring to Fig. **1****,** the optical system includes an optical waveguide 01, a protective cover plate 02, and a corrective optical element 03 which are stacked. As shown in Fig. 1, the protective cover plate 02 is used to protect a microstructure such as a grating on the optical waveguide 01. A layer of corrective optical elements 03, such as a myopia lens (e.g. a concave lens as shown in Fig. 1) or a hyperopia lens (e.g. a convex lens), is added between the human eye and the optical waveguide 01. Users can see the display screen clearly by using the corrective optical element 03 to perform refractive correction on human eyes.

However, a corrective optical element such as a myopia lens or a hyperopia lens are thick and heavy. The addition of a myopia lens or a hyperopia lens will increase the overall thickness and weight of the AR device. With the increase of the diopter of users, the increase of the weight and the thickness of the AR device will be more significant.

At least one embodiment of the present disclosure provides an optical system including an optical waveguide and a Fresnel lens. The optical waveguide includes a waveguide substrate, a coupling-in structure and a coupling-out structure. The coupling-in structure and the coupling-out structure are provided on the waveguide substrate. The optical waveguide is configured such that at least part of light coupled into the optical waveguide via the coupling-in structure exits via the coupling-out structure after undergoing total internal reflection propagation in the optical waveguide. The Fresnel lens is located on a light-exiting side of the optical waveguide. The coupling-out structure includes a grating. The Fresnel lens includes Fresnel teeth. The Fresnel teeth are configured to adjust an exit angle of at least part of light passing through the Fresnel lens. **In** a direction perpendicular to the waveguide substrate, the coupling-out structure and the Fresnel teeth overlap.

At least one embodiment of the present disclosure provides a display apparatus, including an opto-mechanical module and the optical system of the above embodiment. The coupling-in structure is configured to couple the light emitted by the opto-mechanical module into the waveguide substrate.

According to the optical system and the display apparatus provided by at least one embodiment of the present disclosure, the light incident on the Fresnel lens after exiting from the coupling-out structure of the optical waveguide can be regulated by the Fresnel teeth, so that the exit angle of at least part of light is changed. Therefore, the Fresnel lens can be used for refractive correction, so that the optical system and the display apparatus are thinner, and at the same time, users with refractive errors can see the display screen clearly.

An optical system and a display apparatus will be described with reference to the drawings and through some embodiments.

Fig. 2 is a schematic diagram of a partial structure of a display apparatus according to an example in at least one embodiment of the present disclosure.

Referring to Fig. 2, the optical system includes an optical waveguide 100 and a Fresnel lens 200. The optical waveguide 100 includes a waveguide substrate 110, a coupling-in structure 120 and a coupling-out structure 130. The coupling-in structure 120 and the coupling-out structure 130 are provided on the waveguide substrate 110. The optical waveguide 100 is configured such that at least part of light coupled into the optical waveguide 100 via the coupling-in structure 120 exits via the coupling-out structure 130 after undergoing total internal reflection propagation in the optical waveguide 100. For example, the coupling-in structure may include a structure such as a reflective mirror or a grating, so that the light can be coupled into the optical waveguide through the coupling-in structure and undergoes total internal reflection propagation in the optical waveguide. For example, the coupling-out structure 130 includes a grating to change a reflection angle of the light which undergoes total internal reflection propagation in the optical waveguide 100 and to enable the light to exit from the optical waveguide 100. For example, all the light in the optical waveguide can be exited after undergoing total internal reflection propagation. For example, a part of light in the optical waveguide can be exited after undergoing total internal reflection propagation, and the other part of the light can be directly exited, which is not limited in the present disclosure.

Fig. 3A is a schematic diagram of a refraction lens. Fig. 3B is a cross-sectional schematic diagram of a Fresnel lens. Fig. 3C is a plane schematic diagram of a Fresnel lens shown in Fig. 3B.

The Fresnel lens is also referred to as a threaded lens. As shown in Fig. 3A and Fig. 3B, the Fresnel lens divides a curved surface of a refraction lens into a series of tiny toothed structures (that is, Fresnel teeth). As shown in Fig. 3C, patterns formed by the toothed structures roughly consist of a series of concentric circles. These toothed structures can change the tortuosity of light refraction, so that the Fresnel lens 200 can greatly reduce the thickness and the weight of the lens with a short focal length.

Referring to Fig. 2, the Fresnel lens 200 is located on a light-exiting side of the optical waveguide 100. The light exited from the optical waveguide 100 can be incident on the Fresnel lens 200. The Fresnel lens 200 includes Fresnel teeth 201. The Fresnel teeth 201 are configured to adjust an exit angle of at least part of light passing through the Fresnel lens 200. For example, Fresnel teeth can adjust the exit angle of all light passing through the Fresnel lens. For example, the Fresnel teeth can only adjust the exit angle of a part of light passing through the Fresnel lens, which is not limited in the present disclosure. In a direction perpendicular to the waveguide substrate 110, the coupling-out structure 130 and the Fresnel teeth 201 overlap. The light incident on the Fresnel lens 200 after exiting from the coupling-out structure 130 of the optical waveguide 100 can be adjusted by the Fresnel teeth 201, so that the exit angle of at least part of light is changed. Compared with the corrective optical element 03 shown in Fig. 1, the Fresnel lens 200 is thinner in size, which is beneficial to the thinness and lightness of the entire optical system. Therefore, the Fresnel lens 200 can be used for refractive correction, so that the optical system and the display apparatus are thinner, and at the same time, users with refractive errors can see the display screen clearly.

For example, the overall thickness of the Fresnel lens can be no more than 2 mm. For example, the overall thickness of the Fresnel lens can be 1 mm to 2 mm. For example, the overall thickness of the Fresnel lens can be less than 1 mm. For example, the overall thickness of the Fresnel lens refers to the overall thickness including the Fresnel teeth.

Referring to Fig. 2, in combination with the examples described below, the display apparatus including the optical system described above further includes an opto-mechanical module 10. The coupling-in structure 120 is configured to couple light emitted by the opto-mechanical module 10 into the waveguide substrate **110.** For example, the opto-mechanical module 10 is located on a light incident side of the optical waveguide 100. For example, the opto-mechanical module 10 is configured to emit parallel light. For example, the opto-mechanical module includes a display screen, an assembly of an optical lens, and a positioning structural component. For example, the opto-mechanical module 10 is located on a side of the Fresnel lens 200 away from the optical waveguide 100.

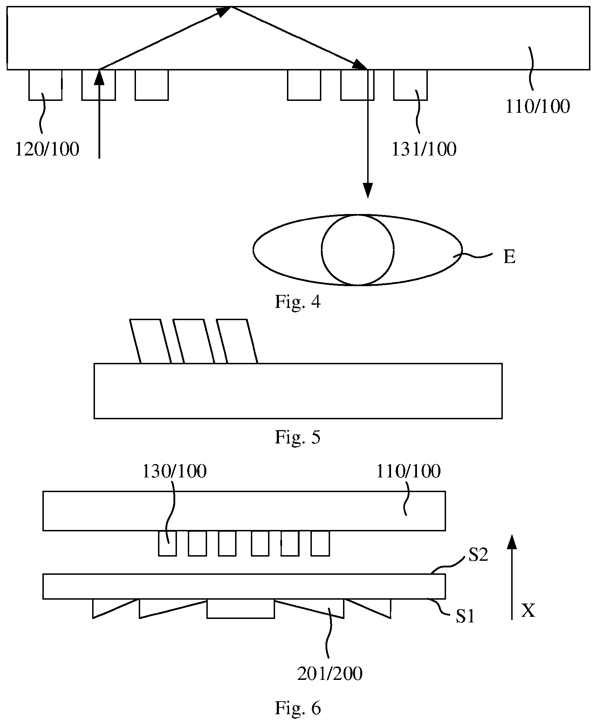

Fig. 4 is a schematic diagram of an optical path of an optical waveguide 100 of an optical system in a display apparatus shown in Fig. 2. Fig. 4 omits the Fresnel lens.

Referring to Fig. 2 and Fig. 4, in some examples, the coupling-out structure 130 includes a transmission grating 131. The transmission grating 131 is provided on a side of the waveguide substrate **110** facing the Fresnel lens 200, so that at least part of the light incident on the optical waveguide 100 is incident on the Fresnel lens 200 after being transmitted via the transmission grating 131. Therefore, the light that undergoes total internal reflection in the waveguide substrate 110 can exit from the optical waveguide 100 through the transmission grating 131, so as to be incident on the Fresnel lens 200 and finally reach a human eye E.

Fig. 5 is a schematic diagram of an inclined grating. For example, the transmission grating 131 may include an inclined grating as shown in Fig. 5. However, the present disclosure is not limited thereto, as long as the light in the optical waveguide can exit by the transmission grating after being transmitted.

Referring to Fig. 2, in some examples, the Fresnel lens 200 is configured as a protective cover plate of the optical waveguide 100. The Fresnel lens 200 not only can adjust the exit angle of light, but also protect the microstructure (such as the transmission grating 131) on the optical waveguide 100. Therefore, there is no need to additionally arrange the protective cover plate of the optical waveguide 100, so that the overall thickness and weight of the optical system can be reduced.

Fig. 6 to Fig. 8 are partial schematic diagrams of optical systems according to different examples in at least one embodiment of the present disclosure. Fig. 6 to Fig. 8 schematically show different arrangements of the coupling-out structure 130 of the optical waveguide 100 and the Fresnel teeth 201 of the Fresnel lens 200, which will be described in detail in the following embodiments.

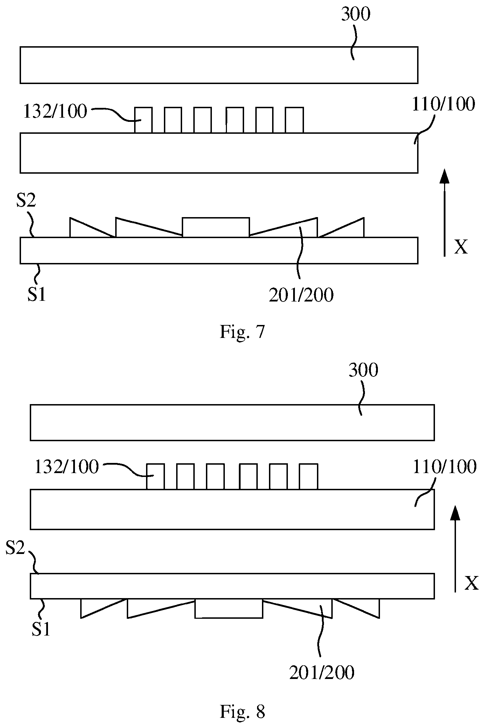

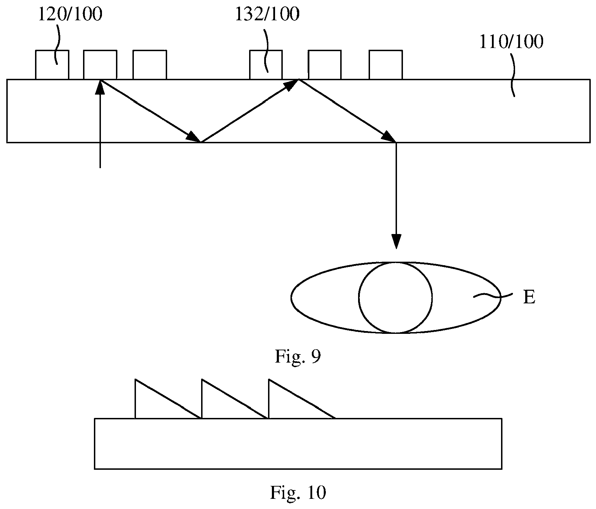

Fig. 9 is a schematic diagram of an optical path of an optical waveguide 100 of an optical system shown in Fig. 7.

Referring to Fig. 7, Fig. 8 and Fig. 9, in some examples, the coupling-out structure 130 includes a reflection grating 132. The reflection grating 132 is provided on a side of the waveguide substrate 110 away from the Fresnel lens 200, so that at least part of the light incident on the optical waveguide 100 is incident on the Fresnel lens 200 after being reflected via the reflection grating 132. Therefore, the light that undergoes total internal reflection in the waveguide substrate 110 can exit from the optical waveguide 100 after being reflected through the reflection grating 132, so as to enter the Fresnel lens 200. The optical system further includes a protective cover plate 300. The protective cover plate 300 is located on a side of the reflection grating 132 away from the Fresnel lens 200 to protect the reflection grating 132. For example, the protective cover plate 300 includes a light-transmitting material, such as tempered glass, glass, ultrathin glass, resin , and the like.

Fig. 10 is a schematic diagram of a blazed grating. For example, the reflection grating 132 may include a blazed grating as shown in Fig. 10. However, the present disclosure is not limited thereto, as long as the light in the optical waveguide 100 can exit by the reflection grating 132 after being reflected.

In some examples, the Fresnel lens includes a first surface and a second surface arranged oppositely, and the first surface is located on a side of the second surface away from the optical waveguide. At least a partial region of at least one of the first surface and the second surface is provided with the Fresnel teeth.

As shown in Fig. 2 and Fig. 7, the Fresnel lens 200 may be provided with Fresnel teeth 201 on the second surface S2. That is, the Fresnel lens may be provided with Fresnel teeth 201 on a side facing the optical waveguide 100. As shown in Fig. 6 and Fig. 8, the Fresnel lens 200 may be provided with Fresnel teeth 201 on the first surface S1. That is, the Fresnel lens may be provided with Fresnel teeth 201 on a side away from the optical waveguide 100 and facing a human eye. For example, when the degree of refractive errors is high, the Fresnel lens 200 may be provided with Fresnel teeth 201 on the first surface S1 and the second surface S2 at the same time to facilitate processing and prevent the inclination angle of the Fresnel teeth 201 from being too large. As long as the exit angle of the light exited from the coupling-out structure 130 can be adjusted by the Fresnel teeth 201, the present disclosure does not limit the surface where the Fresnel teeth 201 are located.

For example, all regions of the first surface and the second surface may be provided with Fresnel teeth. For example, a partial region of the first surface may be provided with Fresnel teeth, and another partial region may not be provided with Fresnel teeth. For example, a partial region of the second surface may be provided with Fresnel teeth, and another partial region may not be provided with Fresnel teeth. The region where the Fresnel teeth are provided will be described in detail in the following embodiments.

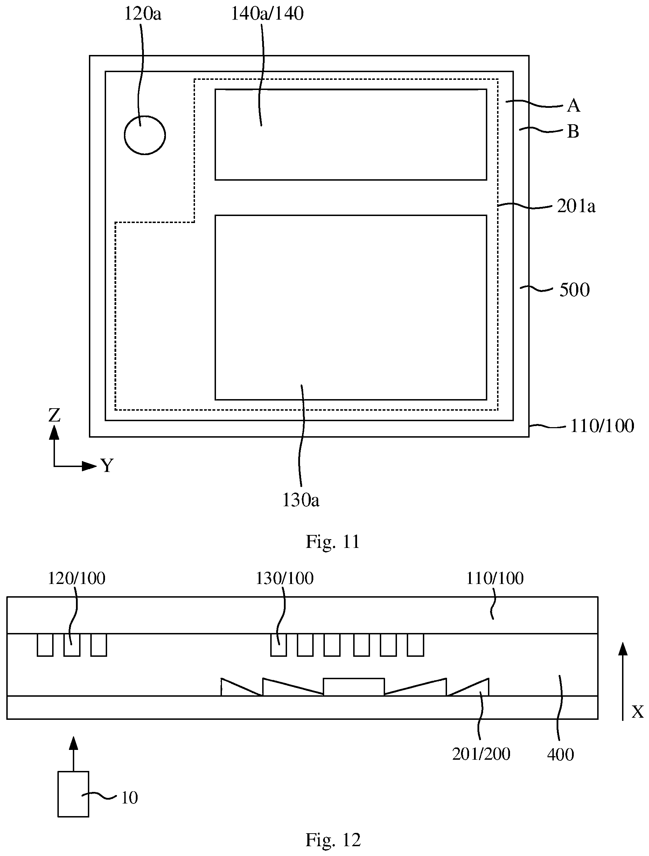

Fig. 11 is a schematic diagram of orthogonal projections of a coupling-in structure, a coupling-out structure, a turning structure, Fresnel teeth and an adhesive layer on a waveguide substrate in an optical system according to an example in at least one embodiment of the present disclosure. The dotted line in Fig. 11 schematically shows the region of the orthogonal projection of the Fresnel teeth on the waveguide substrate, to schematically show the range where the Fresnel teeth are located, rather than act as a limitation on the actual shape of the Fresnel teeth.

Referring to Fig. 2 and Fig. 11, in some examples, an orthogonal projection 130a of the coupling-out structure 130 on the waveguide substrate 110 is within the range of an orthogonal projection 201a of the Fresnel teeth 201 on the waveguide substrate 110, so that the light exited from the coupling-out structure 130 can pass through the Fresnel teeth 201, and the exit angle of the light is adjusted by the Fresnel teeth 201.

Referring to Fig. 2 and Fig. 11, in some examples, an orthogonal projection 120a of the coupling-in structure 120 on the waveguide substrate 110 does not overlap with an orthogonal projection 201a of the Fresnel teeth 201 on the waveguide substrate 110, so as to prevent the Fresnel teeth 201 from interfering with the light incident on the optical waveguide 100. For example, the coupling-in structure 120 includes a grating. In combination with the foregoing embodiments, for example, the Fresnel lens can be processed such that the part corresponding to the coupling-in structure are not provided with Fresnel teeth. For example, the surface corresponding to the coupling-in structure may be a smooth surface on which Fresnel teeth are not provided. Taking Fig. 2 as an example, only a partial region of the second surface S2 of the Fresnel lens 200 is provided with Fresnel teeth 201, and another partial region is not provided with Fresnel teeth 201.

For example, the orthogonal projection of the coupling-in structure on the waveguide substrate does not overlap with the orthogonal projection of the Fresnel lens on the waveguide substrate. In this case, in combination with the foregoing embodiments, taking the example where the first surface of the Fresnel lens is provided with Fresnel teeth, all regions of the first surface may be provided with Fresnel teeth. For example, the Fresnel lens can undergo a processing technology such as cutting to cut off the part corresponding to the coupling-in structure. For example, the position, the size and the shape of the Fresnel lens can be designed so that the coupling-in structure is not corresponding to the Fresnel lens.

Referring to Fig. 2, Fig. 6 to Fig. 8, in some examples, an air gap G is provided between the Fresnel lens 200 and the optical waveguide 100, so as to reduce chromatic aberration by using a refractive index difference between the air gap G and the Fresnel lens 200. Referring to Fig. 7 and Fig. 8, there may also be an air gap between the optical waveguide 100 and the protective cover plate 300, which is not limited in the present disclosure.

Fig. 12 is a schematic diagram of a partial structure of a display apparatus according to an example in at least one embodiment of the present disclosure. The display apparatus shown in Fig. 12 is different from the display apparatus shown in Fig. 2 in that a transparent layer 400 is provided in the optical system of the display apparatus shown in Fig. 12.

Referring to Fig. 12, in some examples, the optical system further includes a transparent layer 400. The transparent layer 400 is provided between the Fresnel lens 200 and the optical waveguide 100, and a refractive index of the transparent layer 400 is smaller than a refractive index of the Fresnel lens 200, so as to reduce chromatic aberration by using a refractive index difference between the transparent layer 400 and the Fresnel lens 200. For example, the material of the transparent layer 400 may include organic glue. For example, the material of the organic glue can have a loose and porous structure, thus having a lower refractive index. For example, a transparent layer may also be provided between the optical waveguide and the protective cover plate as shown in Fig. 7 and Fig. 8, which is not limited in the present disclosure.

**In** some examples, the refractive index of the transparent layer is greater than 1 and less than 1.5. For example, the refractive index of the transparent layer may be 1 to 1.49. For example, the refractive index of the transparent layer may be **1.1** to 1.45. For example, the refractive index of the transparent layer may be 1.15 to 1.4. For example, the refractive index of the transparent layer may be 1.2 to 1.35. For example, the refractive index of the transparent layer may be 1.25 to 1.3.

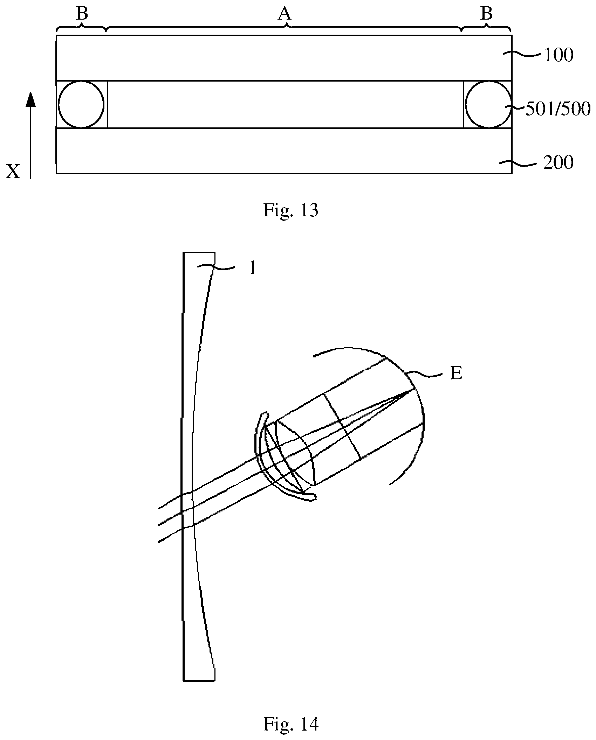

Fig. 13 is a cross-sectional schematic diagram of an optical system shown in Fig. 11.

Referring to Fig. **11** and Fig. 13, in some examples, the optical waveguide 100 includes a middle region A and an edge region B surrounding the middle region A, and both the coupling-in structure 120 and the coupling-out structure 130 are located in the middle region A. The optical system further includes an adhesive layer 500 glued between the Fresnel lens 200 and the optical waveguide 100. The adhesive layer 500 is located in the edge region B and configured to maintain an interval between the optical waveguide 100 and the Fresnel lens 200. For example, the Fresnel lens 200 and the optical waveguide 100 can be frame-bonded using the adhesive layer 500, and at the same time, direct contact between the optical waveguide 100 and the Fresnel lens 200 can be prevented, so as to avoid affecting the optical structure such as a grating located in the middle region A. For example, in combination with the foregoing embodiments, an air gap may be provided between the optical waveguide and the Fresnel lens, or a transparent layer may be provided.

Referring to Fig. 11 and Fig. 13, in some examples, microspheres 501 are provided in the adhesive layer 500, and the microspheres 501 are configured to maintain the interval between the Fresnel lens 200 and the optical waveguide 100. For example, the material of the microspheres 501 may include a thermoplastic material such as Polystyrene (PS). The diameter and the distribution density of the microspheres 501 are designed, which is beneficial to controlling the thickness of the adhesive layer 500.

For example, a diameter of a microsphere of the microspheres may be 10 microns to 100 microns, which is much larger than the grating with a nanometer size, so that the interval between the Fresnel lens and the optical waveguide can be maintained stably. For example, the diameter of the microspheres may be 10 microns to 90 microns. For example, the diameter of the microspheres may be 20 microns to 80 microns. For example, the diameter of the microspheres may be 30 microns to 70 microns. For example, the diameter of the microspheres may be 40 microns to 60 microns. For example, the diameter of the microspheres may be 50 microns.

Referring to Fig. 2 and Fig. 11, in some examples, the optical waveguide 100 includes a turning structure 140 provided on the waveguide substrate 110. For example, the orthogonal projection of the turning structure 140 on the waveguide substrate 110, the orthogonal projection of the coupling-in structure 120 on the waveguide substrate 110, and the orthogonal projection of the coupling-out structure 130 on the waveguide substrate 110 do not overlap with each other. For example, on a plane perpendicular to an arrangement direction of the coupling-in structure 120 and the turning structure 140, the orthogonal projection of the coupling-out structure 130 and the orthogonal projection of the turning structure 140 are spaced from each other, and the orthogonal projection of the coupling-in structure 120 may fall into the orthogonal projection of the turning structure 140. For example, the arrangement direction of the coupling-in structure and the turning structure is the Y direction (that is, the left-right direction) as shown in Fig. 11. For example, the coupling-out structure and the turning structure are arranged in the up-down direction as shown in Fig. 11, and the coupling-in structure and the turning structure are arranged in the left-right direction as shown in Fig. 11. The turning structure 140 can expand the light in the Z direction, and then the light can be further expanded in the Y direction after being incident on the coupling-out structure 130 by the turning structure 140, so that the light distribution can be more uniform, and the range of the light distribution can be wider. For example, the turning structure 140 includes a grating. It can be understood that Fig. 11 only schematically shows the arrangement of the coupling-in structure, the turning structure and the coupling-out structure on the waveguide substrate, but the present disclosure is not limited thereto. The arrangement of the coupling-in structure, the turning structure and the coupling-out structure can be adaptively adjusted according to actual needs.

Referring to Fig. 2 and Fig. 11, in some examples, the turning structure 140, the coupling-in structure 120 and the coupling-out structure 130 are all located on the same side of the waveguide substrate 110 to facilitate processing, but the present disclosure is not limited thereto. For example, the turning structure can be located on one side of the waveguide substrate, and the coupling-in structure and the coupling-out structure can be located on the other side of the waveguide substrate. For example, the coupling-in structure can be located on one side of the waveguide substrate, and the turning structure and the coupling-out structure can be located on the other side of the waveguide substrate. For example, the coupling-out structure can be located on one side of the waveguide substrate, and the coupling-in structure and the turning structure can be located on the other side of the waveguide substrate. It should be noted that when two of the turning structure, the coupling-in structure, and the coupling-out structure are located on two sides of the waveguide substrate, respectively, the Fresnel lens is used as a protective cover plate on one side of the optical waveguide to protect the grating on one side, and a protective cover plate can be provided on the other side of the optical waveguide to protect the grating on the other side.

It should be noted that Fig. 2 and Fig. 11 only schematically show the situation that the turning structure, the coupling-in structure and the coupling-out structure are all one-dimensional gratings, but the present disclosure is not limited thereto. For example, the turning structure, the coupling-in structure and the coupling-out structure can also be two-dimensional gratings or double-sided gratings, respectively.

Referring to Fig. 11, in some examples, an orthogonal projection 140a of the turning structure 140 on the waveguide substrate 110 is within a range of an orthogonal projection 201a of the Fresnel teeth 201 on the waveguide substrate 110. The turning structure 140 has a large area and is located at the position close to center of the visual field of human eyes, so that the range where the Fresnel teeth 201 are located covers the turning structure 140, which is beneficial to correcting a larger visual field of human eyes through the Fresnel teeth 201. It can be understood that it is only necessary that the coupling grating and the Fresnel teeth do not overlap in the direction perpendicular to the waveguide substrate, and the present disclosure does not limit the overlapping relationship between other optical structures on the waveguide substrate, such as the turning grating, and the Fresnel teeth.

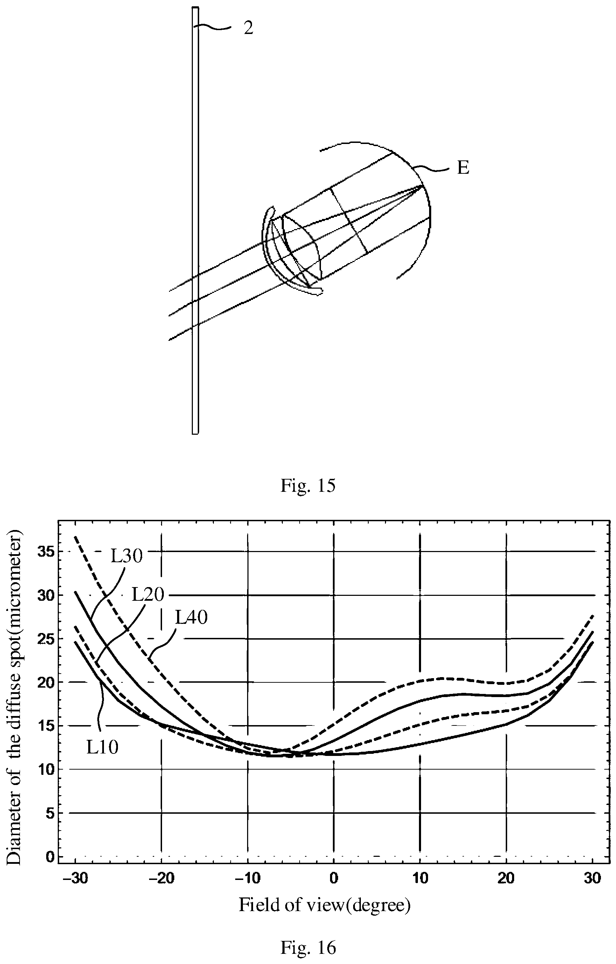

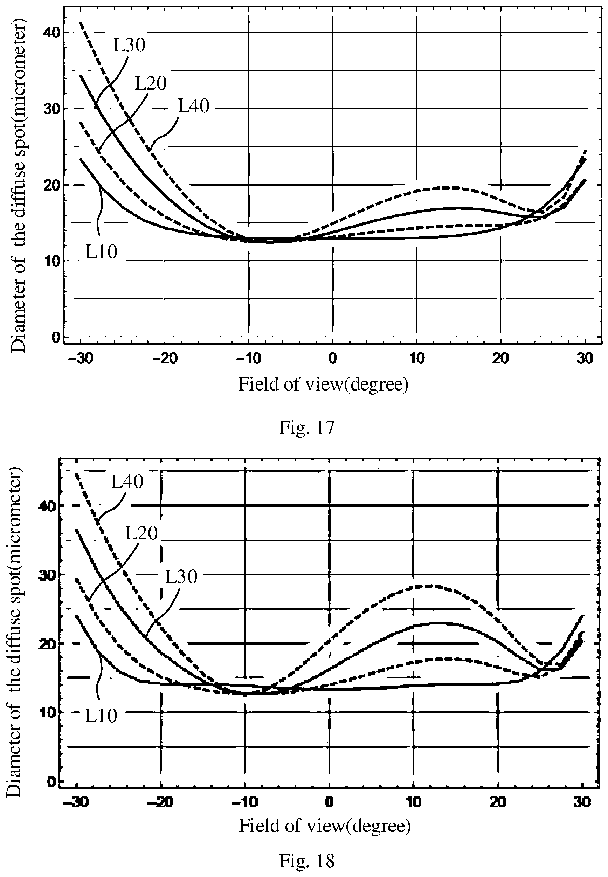

Fig. 14 is a schematic diagram of a myopia lens for refractive correction of human eyes. Fig. 15 is a schematic diagram of a Fresnel lens for refractive correction of human eyes. Fig. 16 is a curve chart showing the variation of a diffuse spot using an ordinary myopic lens with the field of view. Fig. 17 and Fig. 18 are curve charts showing the variation of diffuse spots using different Fresnel lenses as diopter corrective lenses with the field of view, respectively.

It should be noted that the corresponding myopia lens in Fig. 16 and the corresponding Fresnel lenses in Fig. 17 and Fig. 18 are all lenses for correcting myopia of -400 degrees. Fig. 14 schematically shows the positional relationship between the corresponding myopia lens in Fig. 16 and the human eye. Fig. 15 schematically shows the positional relationship between the corresponding Fresnel lenses in Fig. 17 and Fig. 18 and the human eye. As shown in Fig. 14 and Fig. 15, the light reaches the human eye E after passing through the myopia lens 1 or Fresnel lens 2 for refractive correction.

The difference between the corresponding Fresnel lenses in Fig. 17 and Fig. 18 is that the Fresnel lens is the prism-in Fresnel lens in Fig. 17, that is, the Fresnel teeth are arranged facing the human eye (referring to Fig. 6 and Fig. 8), and the Fresnel lens is the prism-out Fresnel lens in Fig. 18, that is, the Fresnel teeth are arranged away from the human eye, that is, facing the optical waveguide (referring to Fig. 2 and Fig. 7).

In Fig. 16 to Fig. 18, the abscissa represents the rotation angle (unit: degrees) of human eyes, that is, the observation angle of human eyes, and the ordinate represents the diameter of the diffuse spot (unit: microns). The smaller the value of the ordinate, the clearer the image is. It can be understood that Fig. 16 to Fig. 18 show the diameters of the diffuse spots that reach human eyes and are imaged on the retina after the distant objects pass through the myopia lens, the prism-in Fresnel lens and the prism-out Fresnel lens, respectively, when human eyes are deflected at different angles, respectively.

As shown in Fig. 14 to Fig. 18, the definitions of the gaze points of the corresponding Fresnel lenses in Fig. 17 and Fig. 18 are close to the imaging quality of the corresponding myopia lens in Fig. 16, which indicates that the Fresnel lens can provide basically the same imaging quality as the ordinary myopia lens when used for refractive correction.

In addition, Fig. 16 to Fig. 18 show the variation of the diameter of the diffuse spot when the human eyes have different pupil deviation, respectively. Pupil deviation refers to the deviation of the pupils of the human eyes from the center. Ideally, when the human eyes look straight ahead, refractive correction can be achieved through the central region of the lens. However, when the human eyes deviate from the central region, the refractive correction effect will decrease. L10 in Fig. 16 to Fig. 18 is a curve in which a pupil deviation distance of the human eyes is 0 mm, L20 is a curve in which a pupil deviation distance of the human eyes is 2 mm, L30 is a curve in which a pupil deviation distance of the human eyes is 4 mm, and L40 is a curve in which a pupil deviation distance of the human eyes is 6 mm.

By comparing Fig. 17 and Fig. 18, it can be seen that the diameter of the diffuse spot of the image point using the prism-in Fresnel lens is smaller than the diameter of the diffuse spot of the image point using the prism-out Fresnel lens at some angles (such as -5 degrees to 25 degrees), that is, the imaging quality is slightly better. This is mainly due to the difference in aberration correction ability of the prism-in Fresnel lens and the prism-out Fresnel lens for the off-axis light. According to the refraction principle of the light, the prism-out Fresnel lens has a slightly stronger deflection ability to the incident light than the prism-in Fresnel lens. In other words, if the deflection angles of the incident light are the same, the prism wedge angle (that is, the inclination angle of the Fresnel teeth) required by the prism-in Fresnel lens is larger than the prism wedge angle of the prism-out Fresnel lens, the overall profile is steeper, and the off-axis aberration can be corrected better, so that the diameter of the diffuse spot of the image point is smaller. Therefore, when the human eyes have pupil deviation, the prism-in Fresnel lens has a higher definition tolerance. That is, when the human eye deviates from the central position, high definition can still be maintained.

An embodiment of the present disclosure provides a display apparatus including an opto-mechanical module and an optical system of any one of examples of the above embodiments. The coupling-in structure is configured to couple the light emitted by the opto-mechanical module into the waveguide substrate. For details, refer to the relevant description in the foregoing examples, and the present disclosure is not limited thereto.

Since the display apparatus according to the embodiment of the present disclosure includes the optical system, the display apparatus also has corresponding beneficial technical effects, which will not be described in detail here.

For example, the display apparatus can be a near-eye display apparatus. For example, the near-eye display apparatus can be an augmented reality (AR) display apparatus.

For example, the near-eye display apparatus can be a wearable AR helmet, an AR glass, etc., and the embodiment of the present disclosure is not limited thereto. For example, the near-eye display apparatus includes a lens, and the lens includes the optical system described above.

The following statements should be noted:
(1) **In** the accompanying drawings of the embodiments of the present disclosure, the drawings involve only the structure(s) in connection with the embodiment(s) of the present disclosure, and other structure(s) can be referred to common design(s).
(2) In case of no conflict, features in one embodiment or in different embodiments can be combined.

What have been described above are only specific implementations of the present disclosure, the protection scope of the present disclosure is not limited thereto, and the protection scope of the present disclosure should be based on the protection scope of the claims.

## Claims

1. An optical system, comprising:
an optical waveguide (100), comprising a waveguide substrate (110), a coupling-in structure (120) and a coupling-out structure (130), wherein the coupling-in structure (120) and the coupling-out structure (130) are provided on the waveguide substrate (110); and the optical waveguide (100) is configured such that at least part of light coupled into the optical waveguide (100) via the coupling-in structure (120) exits via the coupling-out structure (130) after undergoing total internal reflection propagation in the optical waveguide (100); and
a Fresnel lens (200), located on a light-exiting side of the optical waveguide (100);
wherein the coupling-out structure (130) comprises a grating (131,132), the Fresnel lens (200) comprises Fresnel teeth (201), and the Fresnel teeth (201) are configured to adjust an exit angle of at least part of light passing through the Fresnel lens (200); and
in a direction perpendicular to the waveguide substrate (110), the coupling-out structure (130) and the Fresnel teeth (201) overlap.

2. The optical system according to claim 1, wherein the coupling-out structure (130) comprises a transmission grating (131);
the transmission grating (131) is provided on a side of the waveguide substrate (110) facing the Fresnel lens (200), so that at least part of the light incident on the optical waveguide (100) is incident on the Fresnel lens (200) after being transmitted via the transmission grating (131).

3. The optical system according to claim 2, wherein the Fresnel lens (200) is configured as a protective cover plate (300) of the optical waveguide (100).

4. The optical system according to claim 1, wherein the coupling-out structure (130) comprises a reflection grating (132);
the reflection grating (132) is provided on a side of the waveguide substrate (110) away from the Fresnel lens (200), so that at least part of the light incident on the optical waveguide (100) is incident on the Fresnel lens (200) after being reflected via the reflection grating (132);
the optical system further comprises a protective cover plate (300), and the protective cover plate (300) is located on a side of the reflection grating (132) away from the Fresnel lens (200).

5. The optical system according to any one of 2 to 4, wherein the Fresnel lens (200) comprises a first surface (S1) and a second surface (S2) arranged oppositely, and the first surface (S1) is located on a side of the second surface (S2) away from the optical waveguide (100);
at least a partial region of at least one of the first surface (S1) and the second surface (S2) is provided with the Fresnel teeth (201).

6. The optical system according to claim 5, wherein an orthogonal projection of the coupling-out structure (130) on the waveguide substrate (110) is within a range of an orthogonal projection of the Fresnel teeth (201) on the waveguide substrate (110).

7. The optical system according to claim 5 or 6, wherein an orthogonal projection of the coupling-in structure (120) on the waveguide substrate (110) does not overlap with an orthogonal projection of the Fresnel teeth (201) on the waveguide substrate **(110).**

8. The optical system according to any one of claims 1 to 7, wherein an air gap (G) is provided between the Fresnel lens (200) and the optical waveguide (100).

9. The optical system according to any one of claims 1 to 7, further comprising a transparent layer (400); wherein the transparent layer (400) is provided between the Fresnel lens (200) and the optical waveguide (100), and a refractive index of the transparent layer (400) is smaller than a refractive index of the Fresnel lens (200).

10. The optical system according to claim 9, wherein the refractive index of the transparent layer (400) is greater than 1 and less than 1.5.

11. The optical system according to any one of claims 1 to 10, wherein the optical waveguide (100) comprises a middle region (A) and an edge region (B) surrounding the middle region (A), and both the coupling-in structure (120) and the coupling-out structure (130) are located in the middle region (A);
the optical system further comprises an adhesive layer (500) glued between the Fresnel lens (200) and the optical waveguide (100), and the adhesive layer (500) is located in the edge region (B) and configured to maintain an interval between the optical waveguide (100) and the Fresnel lens (200).

12. The optical system according to claim **11,** wherein microspheres (501) are provided in the adhesive layer (500), and the microspheres (501) are configured to maintain the interval between the Fresnel lens (200) and the optical waveguide (100).

13. The optical system according to any one of claims 1 to 12, wherein the optical waveguide (100) comprises a turning structure (140) provided on the waveguide substrate (110);
the turning structure (140), the coupling-in structure (120) and the coupling-out structure (130) are all located on a same side of the waveguide substrate (110).

14. The optical system according to claim 13, wherein an orthogonal projection of the turning structure (140) on the waveguide substrate (110) is within a range of an orthogonal projection of the Fresnel teeth (201) on the waveguide substrate (110).

15. A display apparatus, comprising an opto-mechanical module (10) and the optical system according to any one of claims 1 to 14;
wherein the coupling-in structure (120) is configured to couple light emitted by the opto-mechanical module (10) into the waveguide substrate (110).
